Europäisches Patentamt

European Patent Office

Office européen des brevets

(19)

(11) Publication number: **0 290 856 B1**

# EUROPEAN PATENT SPECIFICATION

(12)

(45) Date of publication of patent specification: **09.10.91**

(51) Int. Cl.⁵: **A01M 29/00, B65D 75/38, B65D 75/62**

(21) Application number: **88106653.4**

(22) Date of filing: **26.04.88**

(54) Signalling and repelling water soluble powder container.

(30) Priority: **15.05.87 IT 2161087 U**

(43) Date of publication of application:
**17.11.88 Bulletin 88/46**

(45) Publication of the grant of the patent:
**09.10.91 Bulletin 91/41**

(84) Designated Contracting States:
**AT BE CH DE ES FR GB GR IT LI LU NL SE**

(56) References cited:
DE-A- 3 607 111        FR-A- 1 417 040
FR-A- 2 176 968        FR-A- 2 408 279
GB-A- 2 176 732        US-A- 3 741 778

(73) Proprietor: **FARMITALIA CARLO ERBA S.r.L.**
**Via Carlo Imbonati 24**
**I-20159 Milano(IT)**

(72) Inventor: **Bonfichi, Riccardo**
**Via Ugo Betti 65**
**I-20100 Milan(IT)**

(74) Representative: **Giambrocono, Alfonso, Dr.**
**Ing. et al**
**Ing. A. Giambrocono & C. S.r.l. Via Rosolino**
**Pilo 19/B**
**I-20129 Milano(IT)**

## Description

The present invention relates to containers for holding water soluble powders for signalling and repelling sharks and the like, to be used in emergency cases in which a person is compelled to remain in water waiting for helps.

Containers in the above type are already known and essentially consist of an inner bag,permeable to water,an an outer impermeable envelope,also of bag shape.The water permeable bag holds the mentioned water soluble powder and is closed by several methods and then coupled to the impermeable envelope by a coupling metal ring member which is caused to pass through a throughgoing hole formed through the top portion of the powder container,said ring member also operating as a container suspension member.Through the center opening of said ring member,after it has been coupled to the container,a suspension cord is caused to pass to suspend the container to the neck of a person.

The impermeable envelope is provided with a vertically extending band provided with a tear away tab which covers a window formed through the bottom portion of the envelope and extending on the two sides thereof.

This known container can be constructed in a rather complex way requiring a lot of making steps.

In fact the permeable bag must be firstly filled with the watersoluble powder and then it must be closed.

The outer impermeable envelope,in particular, is made starting from a plastics material rectangular sheet provided at the center thereof with a rectangular window.

This window is then closed by thermosealing thereon a plastics material strip having slightly greater size than the window size.

The plastics material sheet is then bent at the middle and the permeable bag is arranged therein and coupled to the bent plastics material sheet by means of the mentioned metal deformable ring member which is pressure applied at a suitable round hole formed through said bent sheet so as to pass through the top edge of the permeable bag together with that edge which will form the top edge of the impermeable envelope.Finally,in order to provide a tight envelope, on the three remaining open sides the corresponding flaps of the bent sheet will be thermosealed.

Another drawback of this known container is that,in order to tear away the band covering said window,one must apply to the tear away tab a rather high tearing force,which operation would be rather difficult in an emergency condition.

## SUMMARY OF THE INVENTION

The present invention intends to overcome the above mentioned drawbacks of known water soluble powder containers by providing such a container which can be made in a simple and quick way and in which the mentioned tear away tab can be removed by a very reduced force.

According to one aspect of the present invention, the above object is achieved by a water soluble powder container comprising an inner closed powder holding permeable bag, an outer impermeable envelope and a suspension ring member projecting from said outer impermeable envelope as this latter has been thermosealed, characterized in that said suspension ring member is formed by a plastics material band, to said permeable bag there are coupled the two ends of said plastics material band, and in that said impermeable envelope is provided, on both sides thereof and at set positions, with a preset tear segment, the two preset tear segments having a common end coinciding with one of the free edges of the impermeable envelope.

Thus the subject container can be made in a very simple way.

In fact,after having filled the permeable bag and closed it in a conventional manner, it will be sufficient to engage therewith, by any conventional methods, the two ends of the mentioned plastics material band. This band,in particular,will be folded into two portions and preferably arranged so as to locate each end thereof on a respective side of the permeable bag.

Thus,upon application,the band will form a suspension ring therethrough a cord will be caused to pass in order to suspend the container on the neck of a person.

In order to form the outer impermeable envelope, it will be sufficient the permeable bag between the two flaps of a rectangular plastics material sheet, like that used for forming the outer envelope of the above disclosed known container,the main difference being that the invention does not provide for the use of a window,but the simple two mentioned tear segments.

At this time,it will be sufficient to thermoseal the corresponding flaps of the three open sides of the bent plastics sheet so as to cause the suspension ring member formed by the band coupled to the permeable bag to project from the impermeable envelope.

Thus,it should be apparent that the container according to the invention can be made in a very simple way.In particular it should be pointed out that a single thermosealing operation will be sufficient.

Moreover,as the container is to be used in emergency conditions,it will be sufficient to tear the outer envelope along the preset tear segments,by possibly using a cutting tool or the teeth,so as to facilitate the tearing of the envelope at the common end of the tear segments which will coincide with the edge of said envelope.

Upon tearing,water will enter said envelope and permeable bag so as to dissolve the water soluble powder contained therein,the formed solution being able of exiting said envelope from the torn away zone thereof.

Thus,about the water immersed person bearing on his/her neck the subject container,a colored stain will be formed adapted to repel sharks.

The invention will become more apparent hereinafter from the following detailed description, given by way of an indicative example,and with reference to the accompanying drawing,in which:

Figure 1 is a front view of the inner permeable bag thereto a suspension band has been applied;

Figure 2 is a vertical cross-section view taken along the line II-II of figure 1; and

Figure 3 is a front view of the container according to the present invention,in a ready for use condition.

## DESCRIPTION OF THE PREFERRED EMBODIMENT

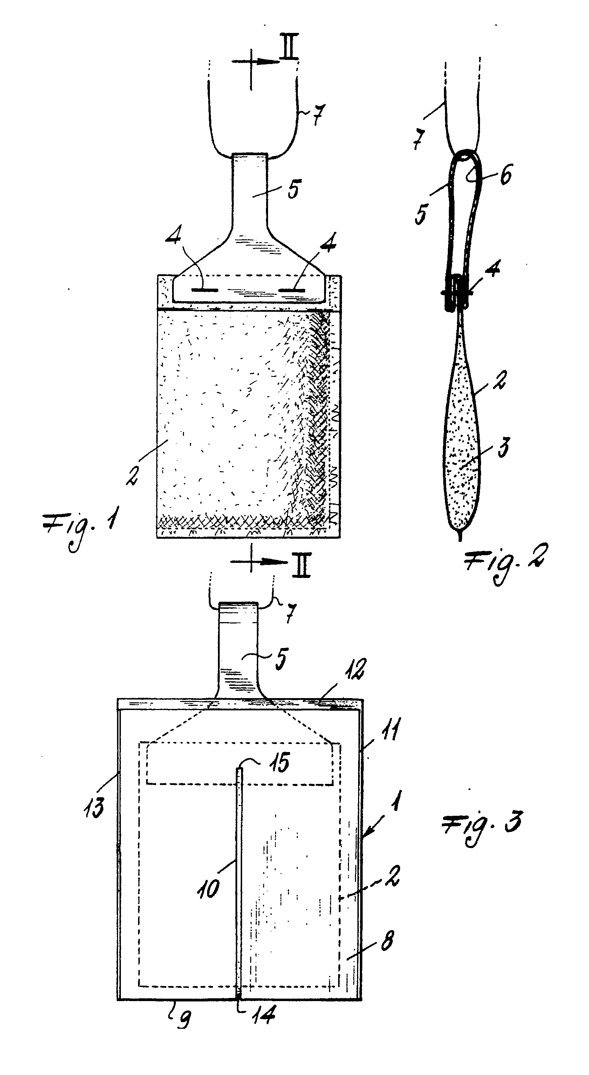

The container 1 according to the present invention,which is generally illustrated in figure 3, comprises a permeable inner bag 2 (figs. 1 and 2) made of fabric and containing colored and fluorescent powders, of the water soluble type,3 which are adapted to repel sharks and the like.These powders are filled in through the top mouth of the bag 2,the top edge of which will be then bent as shown in figs. 1 and 2,and preferably closed by metal staples 4 applied by means of suitable staplers.In this connection it should be apparent that the bag can also be closed by other known methods,such as glueing or yarn seaming.

Advantageously the staples closing said bag 2 can also be used for coupling to said bag a plastics material band 5,folded on itself,as shown in figures 1 and 2.Otherwise, said band 5 can also be affixed to said permeable bag by any other known means.Advantageously, the two end portions of the band 5 can be designed with a large width so as to include a main portion of the mouth of the bag 2 or the overall mouth.

Thus, the band 5 will form a suspension ring member 6 therethrough a cord 7 will be entrained to bind said container 1 to the neck of a person.

Then the bag 2 will be introduced into an envelope 8 made by folding,along a middle line 9,a rectangular plastics material sheet,so sized as to be able of holding the bag 2.This sheet is provided, at its center line perpendicular to the center line 9,with a preset wear rectilinear segment which is centered with respect to said sheet.

This sheet,as it is folded about the center line 9,will provide an envelope in which corresponding flaps of the three opening remaining sides are thermosealed respectively along the lines 11,12 and 13 so as to form the impermeable envelope 8 therefrom the suspension band 5 projects.This envelope 8 is provided, on both its faces or sides,with a preset tear segment 10.

As stated,in order to use the container,it will be sufficient to tear the envelope 8 along the preset tear segments 10,starting from the lower common point 14 thereof,by possibly using a knife or the teeth, to facilitate the tearing of the envelope to the top end point 15 of the segments 10.In the thus formed opening through the envelope 8 water will penetrate thereby dissolving the powder held in the permeable bag 2.The obtained solution will freely exit that same opening to diffuse through the water pool encompassing the person.Thus a colored fluorescent spot will be formed,adapted to repel sharks.

## Claims

1.  A water soluble powder container (1) adapted to hold water soluble powders for signalling and/or repelling sharks and the like, comprising an inner closed powder holding permeable bag (2), an outer impermeable envelope(8) and a suspension ring member projecting from said outer impermeable envelope (8) as this latter has been thermosealed (11,12,13), characterized in that said suspension ring member is formed by a plastics material band to said permeable bag there are coupled the two ends of said plastics material band (5), and in that the impermeable envelope (8) is provided, on both sides thereof and at set positions, with a preset tear segment (10), the two tear segments having a common end coinciding with one (9) of the free edges of the impermeable envelope (8).

2.  A container (1) according to Claim 1, characterized in that said suspension band (5) is applied to the mouth of said permeable bag (2) by metal staples applied by means of a conventional stapler so as to simultaneously close said bag (2).

3.  A container (1) according to Claim 1, characterized in that said preset tear segments (10) are formed at the middle center axis of said container (1).

## Revendications

1. Récipient (1) pour poudres hydrosolubles, conçu pour contenir des poudres hydrosolubles servant à signaler et/ou repousser des requins et autres, comprenant un sac perméable intérieur fermé (2) contenant les poudres, une enveloppe extérieure imperméable (8) et un élément annulaire de suspension dépassant de ladite enveloppe extérieure imperméable (8) une fois que cette dernière a été fermée par thermosoudage (11, 12, 13), caractérisé en ce que ledit élément annulaire de suspension est formé par une bande de matière plastique, les deux extrémités de ladite bande (5) de matière plastique étant assujetties audit sac perméable, et en ce que l'enveloppe imperméable (8) est pourvue, sur ses deux côtés et à des emplacements prédéterminés, d'un segment arrachable préfixé (10), les deux segments arrachables ayant une extrémité commune qui coïncide avec un (9) des bords libres de l'enveloppe imperméable (8).

2. Récipient (1) selon la revendication 1, caractérisé en ce que ladite bande de suspension (5) est disposée à l'embouchure dudit sac perméable (2) à l'aide d'agrafes métalliques mises en place à l'aide d'une agrafeuse classique de façon à fermer en même temps ledit sac (2).

3. Récipient (1) selon la revendication 1, caractérisé en ce que lesdits segments arrachables préfixés (10) sont formés au niveau de l'axe central médian dudit récipient (1).

## Patentansprüche

1. Behälter (1) für wasserlösliches Pulver, der dazu geeignet ist, wasserlösliche Pulver zum Signalisieren und/ oder Abwehren von Haifischen und dergleichen zu enthalten, umfassend einen inneren, geschlossenen, Pulver enthaltenden, permeablen Beutel (2), eine äußere, impermeable Hülle (8) und ein Aufhängungsringteil, das von der äußeren, impermeablen Hülle (8) vorsteht, wenn diese letztere hitzeverschlossen (11,12,13) worden ist, dadurch **gekennzeichnet,** daß das Aufhängungsringteil mittels eines Kunststoffmaterialsbands ausgebildet ist, wobei mit dem permeablen Beutel die beiden Enden des Kunststoffmaterialbands (5) verbunden sind, und daß die impermeable Hülle (8) auf beiden Seiten derselben und an festgelegten Positionen mit einem vorgewählten Reißabschnitt (10) versehen ist, wobei die beiden Reißabschnitte ein gemeinsames Ende haben, das mit einem (9) der freien Ränder der impermeablen Hülle (8) zusammenfällt.

2. Behälter (1) nach Anspruch 1, dadurch **gekennzeichnet,** daß das Aufhängungsband (5) an der Öffnung des permeablen Beutels (2) mittels Metallkrampen angebracht ist, die mittels einer konventionellen Heftmaschine so angebracht sind, daß sie den Beutel (2) gleichzeitig verschließen.

3. Behälter (1) nach Anspruch 1, dadurch **gekennzeichnet,** daß die vorgewählten Reißabschnitte (10) an der mittleren Mittelachse des Behälters (1) ausgebildet sind.

_Fig. 1_

_Fig. 2_

_Fig. 3_